# EUROPÄISCHE PATENTSCHRIFT

(11) **EP 2 351 125 B1**
(45) Veröffentlichungstag und Bekanntmachung des Hinweises auf die Patenterteilung: **25.05.2016**
(21) Anmeldenummer: 09752735.2
(22) Anmeldetag: 28.10.2009
(51) Int. Cl.: H01M 4/62

(54) **SPREIZMITTEL FÜR DIE AKTIVE MASSE EINER NEGATIVEN ELEKTRODE**
SPREADING MEANS FOR THE ACTIVE MATERIAL OF A NEGATIVE ELECTRODE
EXPANSEUR POUR LA MATIÈRE ACTIVE D'UNE ÉLECTRODE NÉGATIVE

(30) Priorität: 28.10.2008 DE 102008053509
(43) Veröffentlichungstag der Anmeldung: 03.08.2011
(73) Patentinhaber: Johnson Controls Autobatterie GmbH & Co. KGaA, 30419 Hannover (DE)
(72) Erfinder: JOHNS, Frank, 31157 Sarstedt (DE)
(74) Vertreter: Trinks, Ole
(86) Internationale Anmeldenummer: PCT/EP2009/007713
(87) Internationale Veröffentlichungsnummer: WO 2010/049143

(56) Entgegenhaltungen:
- CN-A- 1 960 049
- CN-A- 101 047 241
- CS-B1- 233 764
- DE-A1- 2 524 871
- DE-A1- 4 224 134
- JP-A- 2005 032 633

## Beschreibung

Die Erfindung betrifft ein Spreizmittel für die aktive Masse einer Elektrode, insbesondere in einem Bleiakkumulator sowie eine Platte und einen Bleiakkumulator mit diesem Spreizmittel.

Die Erfindung bezieht sich auf das Gebiet der Leistungsverbesserungen bei Batterien und Akkumulatoren durch Beimischung von sogenannten Expandern oder Spreizstoffen zu den aktiven Massen der negativen Elektroden, und zwar speziell bei Bleiakkumulatoren bzw. Blei-Säure-Batterien.

In Batterien bzw. Akkumulatoren muss das Verhältnis von positivem aktivem Material, negativem aktivem Material und Elektrolyt optimal ausgelegt sein, um eine bestmögliche Performance zu erreichen. Eine schlecht genutzte Masse führt zu unproduktivem Gewicht und unnötigen Kosten bei verminderter Lebensdauer.

Den negativen aktiven Elektrodenmassen werden daher Spreizmittel zugesetzt, die eine ungünstige Kristallisation während der Ladevorgänge zugunsten schwammiger und feinkristalliner Strukturen mit großer Oberfläche verhindern sollen. Angestrebt wird dabei:
- eine große elektrochemisch wirksame Oberfläche,
- eine hohe Startleistung und der lange Erhalt dieser Starleistung,
- bessere Kaltstarteigenschaften,
- hohe Ladungsaufnahme auch bei tiefen Temperaturen,
- das Verhindern oder Hinauszögern des Sinterns bei zyklischer Beanspruchung,
- die Verringerung der Selbstentladung der Platten,
- eine insgesamt höhere Lebensdauer.

Zu den gebräuchlichsten Spreizmitteln gehören organische Spreizmittel auf Ligninbasis. Diese aus natürlichen Rohstoffen gewonnenen Spreizmittel haben eine komplexe und je nach Herkunft des Produkts schwankende Zusammensetzung. Die Verwendung von Spreizmitteln, die aus natürlichen Rohstoffen gewonnen werden, führt im Ergebnis zu variierenden Eigenschaften der Batterien bzw. Akkumulatoren. Diese Stoffe weisen unterschiedliche Gehalte an funktionellen Gruppen wie Methoxy, Sulfo-, Carboxyl- und Phenolgruppen auf, die zu unterschiedlichen Stromaufnahmen, Kaltstartspannungen und Kaltstartentladezeiten führen.

Es wurde daher bereits vorgeschlagen, anstelle der naturstoffbasierten Spreizmittel synthetische Spreizmittel zu verwenden, die chemisch definiert sind und damit zu definierteren, stabileren und besser voraussehbaren Eigenschaften in der aktiven Elektrodenmasse führen.

Aus der DE 27 54 605 A1 ist bekannt, Ferulasäure als Spreizstoff zu verwenden. Die Verwendung von Ferulasäure hat sich in der Praxis aber nicht durchgesetzt. Auch CS233764, CN1960049, JP2005032633, DE2524871, DE4224134 und CN101047241 offenbaren Spreizmittel für Elektroden.

Die Aufgabe der Erfindung besteht darin, ein neues synthetisches Spreizmittel zu finden, das die Nachteile im Stand der Technik vermeidet und das die kostengünstigen und vielverwendeten Ligninsulfonate ersetzen kann.

Allgemein wird die Aufgabe durch ein Spreizmittel für die aktive, insbesondere negative Masse einer Elektrode gelöst, das einen Gehalt an wenigstens einem Succinat oder an Bernsteinsäure oder Derivaten hiervon, wie Iminobernsteinsäure, besitzt. Das Spreizmittel kann dabei aus einem oder mehreren Succinaten bestehen oder diese enthalten. Auch können bekannte Spreizmittel gemischt mit wenigstens einem Succinat verwendet werden.

Ferner wird die Aufgabe gelöst durch die Verwendung wenigstens eines Succinats oder an Bernsteinsäure oder Derivaten hiervon, wie Iminobersteinsäure als Spreizstoff oder in einer Spreizstoff-Zusammensetzung

für die negative aktive Masse eines Bleiakkumulators sowie durch eine Platte für einen Bleiakkumulator mit einem Gitter und einer das Gitter bedeckenden Paste, die Wasser, eine bleihaltige Verbindung und das erfindungsgemäße Spreizmittel enthält und außerdem durch einen Bleiakkumulator mit einer negativen aktiven Masse, in der das erfindungsgemäße Spreizmittel enthalten ist.

Das Succinat kann vorzugsweise ein Iminodibernsteinsäuresalz, insbesondere ein Iminodibernsteinsäurealkali-, erdalkali- oder -ammoniumsalz, oder eine Succinylgruppen oder Iminosuccinylgruppen enthaltende oligomere oder polymere Verbindung - einzeln oder in beliebigen Gemischen hiermit oder hieraus - sein.

In besonders bevorzugter Ausführungsform besteht das erfindungsgemäße Spreizmittel aus Tetranatriumiminodisuccinat (IminodibernsteinsäureNatriumsalz) oder enthält diese Verbindung.

Succinylgruppen oder Iminosuccinylgruppen enthaltende, oligomere oder polymere Verbindungen sind solche Verbindungen, die zwei oder mehr Succinylgruppen oder Iminosuccinylgruppen mit folgendem allgemeinen Aufbau enthalten:

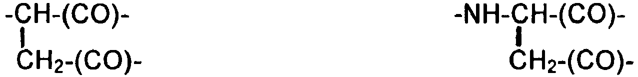

Als Succinylgruppen oder Iminosuccinylgruppen enthaltende oligomere oder polymere Verbindungen können solche eingesetzt werden, wie sie in der EP 0 819 145 B1, auf deren Inhalt hiermit Bezug genommen wird, dargestellt sind.

Als geeignetes Spreizmittel eignet sich z. B. das Produkt Baypure®CX mit einer Zusammensetzung als trockenes Produkt von
Ca. 74 % Iminodibernsteinsäurenatriumsalz
Ca. 6 % H₂O
Ca. 13 % Asperaginsäure
Ca. 2 % Fumarsäure
Ca. 0,1 % Maleinsäure
Ca. 0,1 % Äpfelsäure

Das erfindungsgemäße Spreizmittel hat eine jeweils konstante chemische Zusammensetzung, so dass die elektrochemischen Eigenschaften und die Wirkung auf die Batterieleistung vergleichmäßigt werden. Die thermische Beständigkeit der erfindungsgemäßen Spreizmittel ist im Vergleich zu Ligninsulfonaten besser. Hierdurch verbessert sich auch die Lebensdauer und die Zyklenbeständigkeit deutlich. In den übrigen Eigenschaften ist das erfindungsgemäße Spreizmittel solchen auf Ligninbasis wenigstens gleichwertig.

Das erfindungsgemäße Spreizmittel oder ein Spreizmittelgemisch, welches das erfindungsgemäße Spreizmittel enthält, wird innerhalb der aktiven Elektrodenmasse vorteilhaft in einer Menge von 0,05 bis 3 Gew.-% bezogen auf den Feststoffgehalt der Masse eingesetzt.

### Beispiel

Die Herstellung von Platten bzw. schließlich Blei-Säure-Batterien bzw. Bleiakkumulatoren mit einer negativen aktiven Masse nach der Erfindung erfolgt nach dem üblichen, allgemein bekannten Verfahren. Die Ausgangsstoffe für die bleihaltige negative aktive Masse werden gemischt und mit Schwefelsäure angeteigt. Die Mischung kann dabei beispielsweise 0,2 Gew.-% Tetranatriumiminodisuccinat (C₈H₅O₈NNa₄; (Na-OOC-CH-CH₂-COONa)₂NH) als Spreizmittel enthalten. Die aktive Masse wird sodann auf ein Gitter gestrichen und getrocknet und/oder gealtert. Die Plattengitter bei der Polarität werden zu Plattensätzen zusammengestellt und miteinander verbunden. Diese Plattensätze werden anschließend zu Plattenpaketen zusammengestellt und nach Einfügen von Separatoren in der üblichen Weise in einen Blockkasten eingesetzt, der verschlossen und mit Polen versehen wird, und sodann formiert.

Eine typische Masse für eine negative Bleielektrode nach dieser Erfindung setzt sich zusammen aus:
84,0 Gew.-% Bleistaub
9,0 Gew.-% Wasser
5,0 Gew.-% Schwefelsäure (d=1,4 g/ml)
0,05 bis 3 Gew.-% Succinat (im Sinne der Erfindung, einschließlich von Gemischen)
ad 100 Gew.-% eine Mischung aus Bariumsulfat und/oder Ruß/Graphit oder Mischungen hiervon und ggf. Kunststoffflocken oder Fasern.

Die Untersuchungen zur Belastbarkeit von Batterien, die in ihrer Masse für die negative Elektrode das erfindungsgemäße Spreizmittel enthalten, zeigte, dass verbesserte SOC (state of charge) und Ladungsaufnahmewerte (DCA, dynamic charge acceptance) erreicht werden können. Als Stand der Technik wurde eine aktive negative Masse mit Lignosulfonat als Expander eingesetzt. Während die SOC in den Vergleichsbatterien über die zyklische Beanspruchung gleich blieb, nahm der SOC-Wert bei Batterien mit dem erfindungsgemäßen Spreizmittel mit der Zykluszahl zu. Gleiche Ergebnisse konnten für die Stromaufnahme über die Zyklen beobachtet werden. Auch hier waren die DCA-Werte der erfindungsgemäßen Batterien wesentlich höher als die Batterien mit Lignosulfonate als Spreizmittel.

## Patentansprüche

1. Spreizmittel für die negative aktive Masse eines Bleiakkumulators,
wobei das Spreizmittel innerhalb der aktiven Elektrodenmasse in einer Menge von 0,05 bis 3 Gew.-% bezogen auf den Feststoffgehalt der Masse eingesetzt wird, und wobei das Spreizmittel wenigstens ein Iminodibernsteinsäurealkali-, Erdalkali- oder Ammoniumsalz ist.

2. Verwendung wenigstens eines Succinats Spreizmittel oder in einer Spreizmittel-Zusammensetzung für die negative aktive Masse eines Bleiakkumulators,
wobei das Succinat ein Iminodibernsteinsäuresalz, insbesondere ein Iminodibersteinsäurealkali-, Erdalkali- oder Ammoniumsalz ist.

3. Platte für einen Bleiakkumulator mit einem Gitter und einer das Gitter bedeckenden Paste, die Wasser, eine bleihaltige Verbindung und ein Spreizmittel enthält,
wobei in der Paste das Spreizmittel nach Anspruch 1 enthalten ist.

4. Bleiakkumulator mit einer negativen aktiven Masse,
wobei in der Masse das Spreizmittel nach Anspruch 1 enthalten ist.

## Claims

1. A spreading means for the negative active material of a lead accumulator,
wherein the spreading means is used within the active electrode material at a volume of 0.05 to 3% by weight relative to the solids content of the material, and wherein the spreading means is at least an iminodisuccinic acid alkaline, alkaline earth or ammonium salt.

2. The use of at least one succinate spreading means or spreading means compound for the negative active material of a lead accumulator,
wherein the succinate is an iminodisuccinic acid salt, particularly an iminodisuccinic acid alkaline, alkaline earth or ammonium salt.

3. A plate for a lead accumulator having a grid and a paste covering the grid which contains water, a leaded compound and a spreading means,
wherein the spreading means according to claim 1 is contained in the paste.

4. A lead accumulator comprising a negative active material,
wherein the spreading means according to claim 1 is contained in the material.

## Revendications

1. Agent expanseur pour la masse active négative d'un accumulateur au plomb, dans lequel l'agent expanseur est intégré à l'intérieur de la masse d'électrode active dans une quantité de 0,05 à 3 % en poids par référence à la teneur de la masse en matières solides, et dans lequel l'agent expanseur est au moins un sel alcalin d'acide imino-disuccinique, un sel alcalino-terreux ou un sel d'ammonium.

2. Utilisation d'au moins un succinate comme agent expanseur ou dans une composition formant agent expanseur pour la masse active négative d'un accumulateur au plomb,
dans laquelle le succinate est un sel d'acide imino-disuccinique, en particulier un sel alcalin d'acide imino-disuccinique, un sel alcalino-terreux ou un sel d'ammonium.

3. Plaque pour un accumulateur au plomb comprenant une grille et une pâte qui recouvre la grille, qui contient de l'eau, un composé contenant du plomb et un agent expanseur,
dans laquelle l'agent expanseur selon la revendication 1 est contenu dans la pâte.

4. Accumulateur au plomb comprenant une masse active négative,
dans lequel l'agent expanseur selon la revendication 1 est contenu dans la masse.
